# EUROPEAN PATENT APPLICATION

(11) **EP 3 871 879 A1**
(43) Date of publication of application: **01.09.2021**
(21) Application number: 19877404.4
(22) Date of filing: 18.10.2019
(51) Int. Cl.: B32B 27/12, B32B 7/022, B32B 27/36, C08L 67/03, D06M 15/263, D06M 15/564, D06M 101/32

(54) **COMPOUND SHEET**

(30) Priority: 23.10.2018 JP 2018199069
(71) Applicant: Kuraray Co., Ltd., Kurashiki-shi, Okayama 710-0801 (JP)
(72) Inventor: SUZUKI, Ushio, Osaka-shi, Osaka 530-8611 (JP); WATANABE, Tetsuya, Tokyo 100-8115 (JP); HATTORI, Yuichiro, Osaka-shi, Osaka 530-8611 (JP); IDE, Junya, Kurashiki-shi, Okayama 713-8550 (JP); SUIKO, Shunsuke, Osaka-shi, Osaka 530-8611 (JP); HARII, Tomoaki, Sabae-shi, Fukui 916-8550 (JP); TONOMORI, Fumio, Sabae-shi, Fukui 916-8550 (JP); IWASAKI, Yoshihiro, Sabae-shi, Fukui 916-8550 (JP); MIYAYAMA, Toshihiro, Sabae-shi, Fukui 916-8550 (JP); GENTSU, Hiroki, Sabae-shi, Fukui 916-8550 (JP)
(74) Representative: Müller-Boré & Partner Patentanwälte PartG mbB
(86) International application number: PCT/JP2019/041154
(87) International publication number: WO 2020/085246

(57) **Abstract**

The present invention relates to a composite sheet comprising a woven fabric consisting of liquid crystal polyester fiber in which one side or both sides of the woven fabric is coated with a coating material comprising a thermoplastic resin, wherein a tensile strength of the composite sheet in a warp direction of the woven fabric is 300 N/cm or more, and wherein a ratio of a mass of the thermoplastic resin to a mass of the woven fabric is 5 to 25% by mass.

## Description

### TECHNICAL FIELD

The present invention relates to a composite sheet comprising a woven fabric consisting of liquid crystal polyester fiber in which one side or both sides of the woven fabric is coated with a coating material comprising a thermoplastic resin.

### BACKGROUND ART

In recent years, technological progress in the field of microelectronics has been remarkable, and there is a strong demand for miniaturization and weight reduction in, for example, portable electronic devices. In addition, the parts constituting the device are required to achieve both strength and thinning, since it is necessary to prevent the members constituting the parts from bending significantly and coming into contact with other internal parts or being destroyed when a load is applied from the outside.

A polyimide film is widely used as a film for electronic members because of heat resistance, dimensional stability, flexibility, high bendability, and preferable thin film properties (Patent Document 1). In addition, as a protective sheet, Patent Document 2 has proposed a composite sheet comprising a woven fabric sheet having a plurality of openings and a thermoplastic resin layer consisting of a resin-containing material containing a resin component comprising a thermoplastic polyurethane resin wherein a part of the resin-containing material penetrates into the openings of the woven fabric sheet to plug all of the openings and the thermoplastic resin layer is integrated with the woven fabric sheet, and has shown that the strength, rigidity, and heat resistance of the woven fabric sheet and the flexibility, low temperature properties, and heat fusion properties of the thermoplastic polyurethane resin are exhibited in a well-balanced manner. In addition, Patent Document 3 has proposed a composite sheet comprising glass fibers in which thermoplastic polyurethane sheets are located on both sides of the glass fibers, the thermoplastic polyurethane sheets on both sides are filled in the spaces between the glass fibers, the thermoplastic polyurethane sheets are adhered via the glass fibers, and thereby the composite sheet is integrated as a whole. Document 3 has shown that the composite sheet having high tear strength, high dimensional stability, and good handling can be obtained, since the thermoplastic polyurethane sheets arranged on both sides are filled in the spaces between the glass fibers and the thermoplastic polyurethane sheets are adhered via the glass fibers, and thereby the composite sheet is integrated as a whole.

### PRIOR ART DOCUMENTS

### PATENT DOCUMENTS

Patent Document 1: JP-A-2016-183224
Patent Document 2: JP-A-2011-121284
Patent Document 3: JP-A-2013-126749

### SUMMARY OF THE INVENTION

### PROBLEMS TO BE SOLVED BY THE INVENTION

However, the composite sheet in Patent Document 2 uses the fiber selected from polyester, nylon, and polypropylene for the woven fabric sheet, and therefore exhibits high flexibility and durability; however, the strength of the fiber itself is low and the strength of the composite sheet is insufficient as a composite sheet.

In addition, the composite sheet in Patent Document 3 uses the glass fibers for the purpose of achieving both tear strength and dimensional stability, and therefore exhibits high specific gravity of the composite sheet and insufficient flexibility, and is also problematic in weight reduction and durability. Moreover, this composite sheet is produced by laminating a thermoplastic polyurethane sheet on a cloth consisting of glass fibers, and therefore there is a limit to thinning the composite sheet.

Therefore, an object to be solved by the present invention is to provide a composite sheet that has not only light weight and high strength but also excellent flexibility and high bending resistance.

### SOLUTIONS TO THE PROBLEMS

The present inventors have intensively investigated in order to solve the above object, and have completed the present invention. That is, the present invention includes the following preferable embodiments.
[1] A composite sheet comprising a woven fabric consisting of liquid crystal polyester fiber in which one side or both sides of the woven fabric is coated with a coating material comprising a thermoplastic resin, wherein a tensile strength of the composite sheet in a warp direction of the woven fabric is 300 N/cm or more, and wherein a ratio of a mass of the thermoplastic resin to a mass of the woven fabric is 5 to 25% by mass.
[2] The composite sheet according to the above [1], wherein the thermoplastic resin is selected from the group consisting of a polyurethane resin and an acrylic resin.
[3] The composite sheet according to the above [1] or [2], wherein a tensile strength of the composite sheet in a direction of 45° with respect to a warp direction of the woven fabric is 50 N/cm or more.
[4] The composite sheet according to any one of the above [1] to [3], wherein the composite sheet has a thickness of 10 to 400 µm.
[5] The composite sheet according to any one of the above [1] to [4], wherein a tensile strength of the composite sheet per unit thickness in a warp direction of the woven fabric is 3.0 N/cm/µm or more.
[6] The composite sheet according to any one of the above [1] to [5], wherein the liquid crystal polyester fiber is a multifilament.
[7] The composite sheet according to any one of the above [1] to [6], wherein the composite sheet has an opening ratio of less than 50%.
[8] The composite sheet according to any one of the above [1] to [7], wherein a flexural rigidity B value of the composite sheet is 4.90 × 10⁻² N·cm²/cm or less.

### EFFECTS OF THE INVENTION

The present invention can provide a composite sheet that has not only light weight and high strength but also excellent flexibility and high bending resistance.

### EMBODIMENTS OF THE INVENTION

A composite sheet of the present invention is a composite sheet comprising a woven fabric consisting of liquid crystal polyester fiber in which one side or both sides of the woven fabric is coated with a coating material comprising a thermoplastic resin, wherein a tensile strength of the composite sheet in a warp direction of the woven fabric is 300 N/cm or more, and wherein a ratio of a mass of the thermoplastic resin to amass of the woven fabric is 5 to 25% by mass.

### <Liquid crystal polyester fiber>

The "liquid crystal polyester fiber" in the present invention can be produced by melt spinning of liquid crystal polyester. The liquid crystal polyester is a polyester that exhibits optical anisotropy (liquid crystal property) in the molten phase, and can be certified by, for example, placing a sample on a hot stage, heating it in a nitrogen atmosphere, and observing the transmitted light of the sample. In addition, the liquid crystal polyester consists of a repeating constituent unit derived from, for example, an aromatic diol, an aromatic dicarboxylic acid, or an aromatic hydroxycarboxylic acid, and the chemical constitution of the constituent unit is not particularly limited as long as the effect of the present invention is not impaired. Moreover, the liquid crystal polyester may comprise a constituent unit derived from an aromatic diamine, an aromatic hydroxyamine, or an aromatic aminocarboxylic acid, as long as the effect of the present invention is not impaired.

Examples of the preferable constituent unit include examples shown in Table 1.

**[Table 1]**

| |
|---|
| 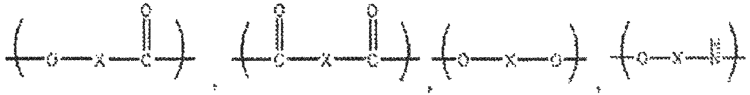 |
| (where X in the formula is selected from the following structure) |
| 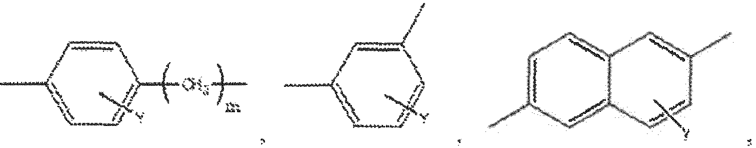 |
| 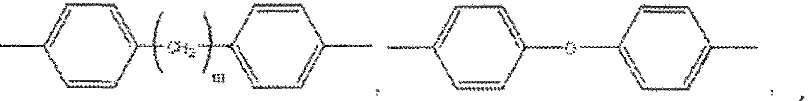 |
| 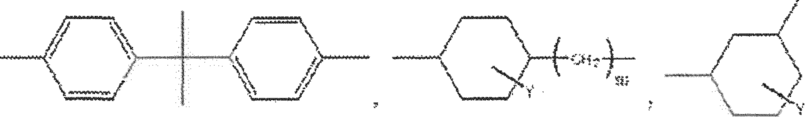 |
| (where m is 0 to 2 and Y is a substituent selected from hydrogen, a halogen atom, an alkyl group, an aryl group, an aralkyl group, an alkoxy group, an aryloxy group, and an aralkyloxy group) |

Herein, the number of Y is 1 to the maximum number of possible substitution in the aromatic ring, and Y is independently selected from a hydrogen atom, a halogen atom (for example, a fluorine atom, a chlorine atom, a bromine atom, an iodine atom,), an alkyl group (for example, an alkyl group having 1 to 4 carbon atoms such as a methyl group, an ethyl group, an isopropyl group, and t-butyl group), an alkoxy group (for example, a methoxy group, an ethoxy group, an isopropoxy group, and a n-butoxy group), an aryl group (for example, a phenyl group and a naphthyl group), an aralkyl group (for example, a benzyl group (a phenylmethyl group), a phenethyl group (a phenylethyl group)), an aryloxy group (for example, a phenoxy group), and an aralkyloxy group (for example, a benzyloxy group).

Examples of the more preferable constituent unit include the constituent units described in Examples (1) to (18) shown in Tables 2, 3, and 4 below. When the constituent unit in the formula is a constituent unit capable of exhibiting a plurality of structures, two or more of such a constituent unit may be combined and used as a constituent unit constituting the polymer.

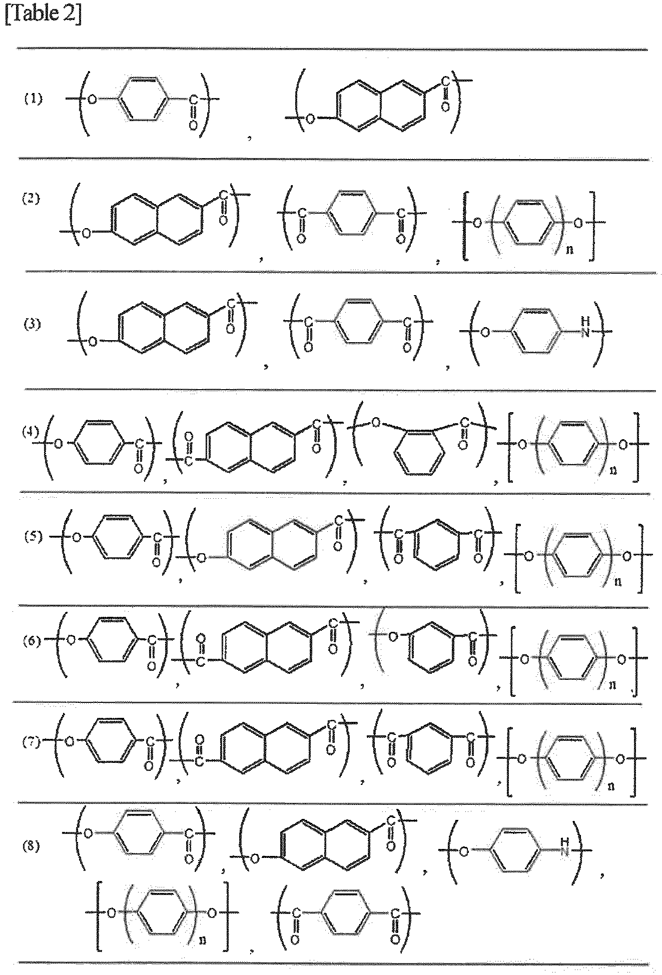

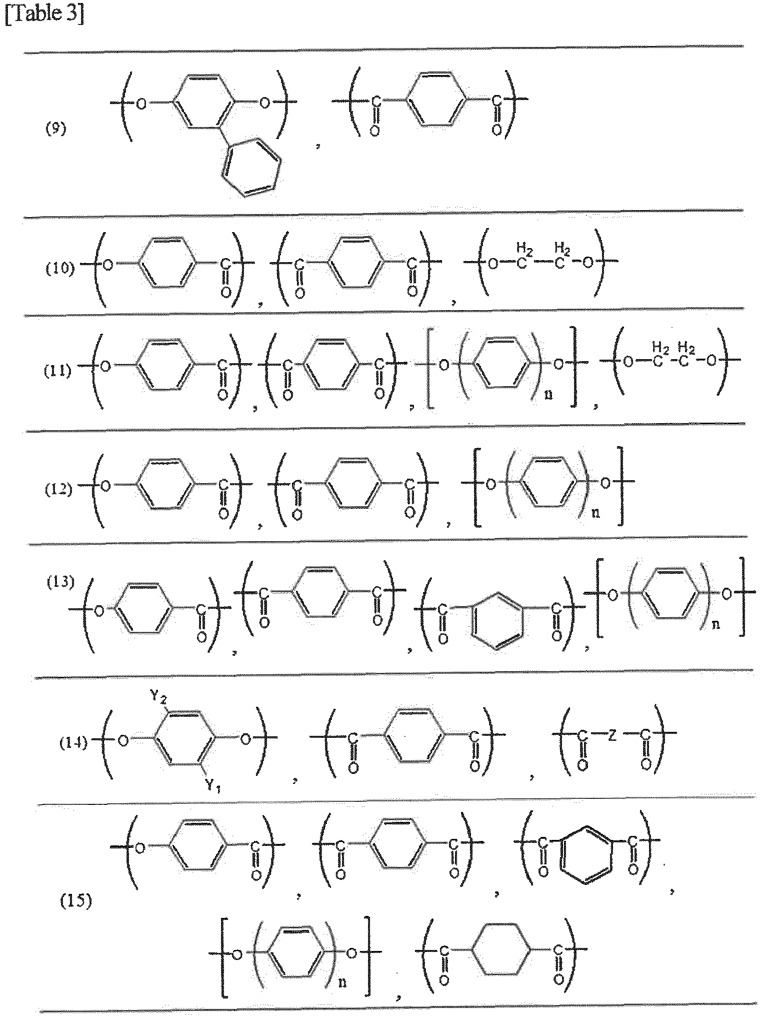

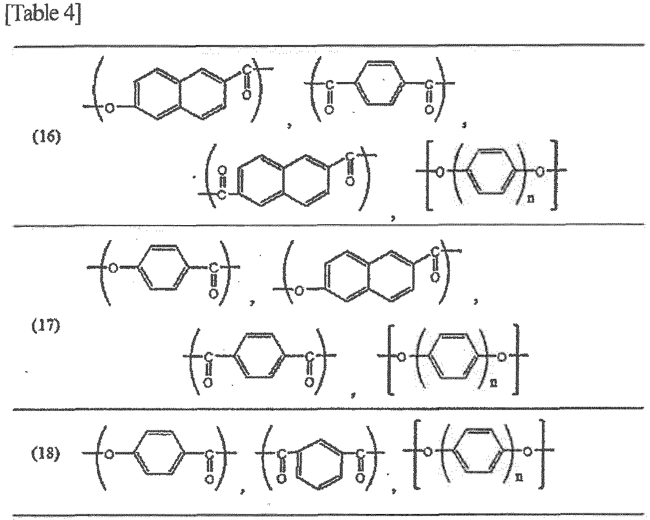

In the constituent units in Tables 2, 3, and 4, n is an integer of 1 or 2, the respective constituent units at n = 1 and n = 2 are present singly or in combination, and Y₁ and Y₂ may be each independently a hydrogen atom, a halogen atom (for example, a fluorine atom, a chlorine atom, a bromine atom, an iodine atom,), an alkyl group (for example, an alkyl group having 1 to 4 carbon atoms such as a methyl group, an ethyl group, an isopropyl group, and t-butyl group), an alkoxy group (for example, a methoxy group, an ethoxy group, an isopropoxy group, and a n-butoxy group), an aryl group (for example, a phenyl group and a naphthyl group), an aralkyl group (for example, a benzyl group (a phenylmethyl group), a phenethyl group (a phenylethyl group)), an aryloxy group (for example, a phenoxy group), and an aralkyloxy group (for example, a benzyloxy group). Of these, examples of preferable Y include a hydrogen atom, a chlorine atom, a bromine atom, or a methyl group.

In addition, examples of Z include a substituent represented by the following formula.

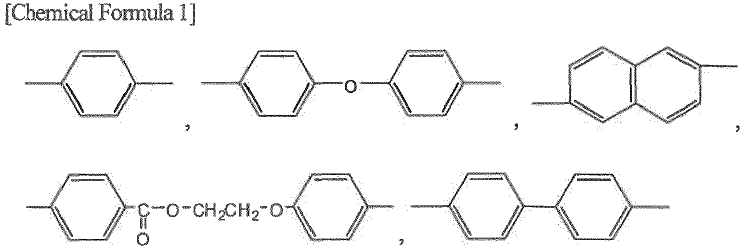

The preferable liquid crystal polyester preferably has two or more of naphthalene skeletons as a constituent unit. Particularly preferably, the liquid crystal polyester comprises both a constituent unit (A) derived from hydroxybenzoic acid and a constituent unit (B) derived from hydroxynaphthoic acid. An example of the constituent unit (A) includes the following Formula (A) and an example of the constituent unit (B) includes the following Formula (B). From the viewpoint of easily improving the melt molding, the ratio of the constituent unit (A) to the constituent unit (B) may be preferably in the range of 9/1 to 1/1, more preferably 7/1 to 1/1, and still more preferably 5/1 to 1/1.

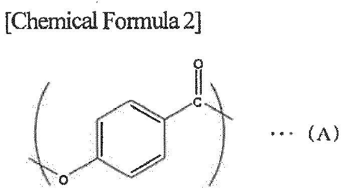

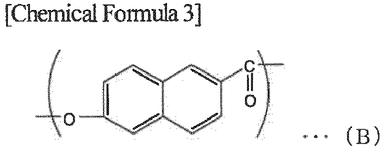

In addition, the total of the constituent unit (A) and the constituent unit (B) may be, for example, 65 mol% or more, more preferably 70 mol% or more, and still more preferably 80 mol% or more, with respect to all of the constituent units. Among the polymer, the liquid crystal polyester having a constituent unit (B) of 4 to 45 mol% is particularly preferable.

The melting point of the liquid crystal polyester preferably used in the present invention is preferably 250 to 360°C, and more preferably 260 to 320°C. Herein, the melting point is a main absorption peak temperature that is observed by measuring with a differential scanning calorimeter (DSC) ("TA3000" manufactured by Mettler-Toledo International, Inc.) in accordance with the JIS K7121 test method. Specifically, in the above DSC apparatus, 10 to 20 mg of a sample is taken and sealed in an aluminum pan, then nitrogen as a carrier gas is flowed at 100 cc/min, and the endothermic peak in raising temperature at 20°C/min is measured. When no clear peak appears in the 1 st run in the DSC measurement depending on the type of polymer, the temperature may be raised to 50°C higher than the expected flow temperature at a temperature-rising rate of 50°C/min, held at this temperature for 3 minutes to achieve complete melting, and cooled to 50°C at a temperature-falling rate of -80°C/min, and then the heat absorption peak may be measured at a temperature-rising rate of 20°C/min.

As long as the effect of the present invention is not impaired, into the above liquid crystal polyester, thermoplastic polymers may be added such as polyethylene terephthalate, modified polyethylene terephthalate, polyolefin, polycarbonate, polyamide, polyphenylene sulfide, polyetheretherketone, and fluororesin. In addition, various additives may be added such as inorganic substances such as titanium oxide, kaolin, silica, and barium oxide; coloring agents such as carbon black, dyes, and pigments; antioxidants; ultraviolet absorbers; and light stabilizers.

The liquid crystal polyester fiber included in the composite sheet of the present invention can be produced by melt spinning of the liquid crystal polyester in a conventional method. Typically, the spinning is performed at a temperature of 10 to 50°C higher than the melting point of the liquid crystal polyester. The fiber after the spinning may be heat-treated. The heat treatment causes solid-phase polymerization (sometimes accompanied by a cross-linking reaction), which improves the strength and elastic modulus and further raises the melting point.

The heat treatment can be performed in an inert atmosphere such as in nitrogen, in an oxygen-containing atmosphere such as in air, or under reduced pressure. The heat treatment is preferably performed in a gaseous atmosphere with a dew point of -40°C or less. Examples of the preferable temperature condition include the temperature condition such that the temperature is gradually raised from the melting point or less of the liquid crystal polyester fiber. The heat treatment can be performed for several seconds to several tens of hours depending on the targeted performance. The heat treatment is typically performed in the state of fiber; however, may be performed in the state of woven fabric as necessary.

The liquid crystal polyester fiber in the present invention may be either a monofilament or a multifilament The liquid crystal polyester fiber is preferably a multifilament from the viewpoint of easily obtaining high tensile strength of the composite sheet, and easily adjusting the thickness and opening ratio of the composite sheet by the thinning treatment after forming the woven fabric.

When the liquid crystal polyester fiber is a multifilament, the single fiber fineness of the liquid crystal polyester fiber is preferably 0.1 to 50 dtex, more preferably 1 to 20 dtex, and particularly preferably 1 to 10 dtex. When the single fiber fineness is within the above range, the fiber can be hardly cut during the production of the liquid crystal polyester fiber and the woven fabric, and sufficient adhesion to the thermoplastic resin (that is, tensile strength and bending resistance of the composite sheet) can be easily obtained. In addition, the total fineness is, for example, 10 to 10000 dtex, preferably 10 to 5000 dtex, and more preferably 50 to 3000 dtex (particularly 70 to 2000 dtex). The number of filament is, for example, 2 to 500, preferably 3 to 300, and more preferably 5 to 200. When the total fineness and the number of filament are within the above range respectively, both light weight and high strength of the composite sheet can be easily achieved.

The multifilament may be soft twisted, but is preferably substantially untwisted. Moreover, the multifilament may be subjected to a defibration treatment and/or a smoothing treatment By producing a woven fabric by use of the multifilament that has been subjected to such a defibration treatment and/or a smoothing treatment, the woven fabric can be thinned, and the ratio of the woven fabric to the thermoplastic resin as described later can be easily adjusted to a preferable range.

Commercially available products can also be used as the "liquid crystal polyester fiber". Examples of such commercially available products include Vectran UM (trade name) manufactured by Kuraray Co., Ltd., Vectran HT (trade name) manufactured by Kuraray Co., Ltd., Ciberus (trade name) manufactured by Toray Industries, Inc., and Zxion (trade name) manufactured by KB Seiren Co., Ltd.

The liquid crystal polyester fiber can be used singly or in combination.

The liquid crystal polyester fiber is included in the composite sheet of the present invention in the form of a woven fabric. Thereby, the composite sheet of the present invention can have excellent tensile strength and thinness (light weight). One composite sheet includes one woven fabric, and from the viewpoint of light weight, the composite sheet is not typically used with multiple composite sheets laminated.

Examples of the woven fabric include a woven fabric structure (I) in which monofilament or multifilament consisting of liquid crystal polyester fiber are interlaced as warp and weft, and a woven fabric structure (II) having at least one layer in which monofilament or multifilament consisting of liquid crystal polyester fiber are arranged in parallel with each other, in which the above filament are not interlaced with each other but are connected with auxiliary fiber.

Examples of the woven fabric structure (I) include plain weave, twill, and satin. Plain weave is preferable from the viewpoint of easily obtaining higher tensile strength that hardly depends on tensile direction.

The woven fabric structure (II) is, for example, an unidirectional woven fabric having one filament layer in which monofilament or multifilament consisting of liquid crystal polyester fiber are arranged in parallel with each other (for example, a blind woven fabric), or a multi-woven fabric in which filament layers obtained by arranging monofilament or multifilament consisting of liquid crystal polyester fiber in parallel with each other are arranged at different angles (for example, a bidirectional woven fabric, a tridirectional woven fabric). Of these, a unidirectional woven fabric is preferable from the viewpoint of the light weight of the composite sheet.

In the woven fabric structure (II), as described above, the monofilament or multifilament consisting of liquid crystal polyester fiber do not interlace with each other and are integrated by the auxiliary fiber. The auxiliary fiber is not particularly limited as long as it can connect the monofilament or multifilament consisting of liquid crystal polyester fiber, and examples thereof include the fiber consisting of, for example, polyester, nylon, acrylic, polyolefin, or polyurethane.

In addition, the interlaced state of the auxiliary fiber for the monofilament or multifilament consisting of liquid crystal polyester fiber is not particularly limited as long as the above filament can be integrated.

A woven fabric consisting of liquid crystal polyester fiber can be produced by using liquid crystal polyester fiber as warp and weft and weaving by a conventional method.

In weaving, the warp may be subjected to a sizing treatment The sizing treatment can hardly causes problems such as poor opening or fiber breakage even in weaving at high speed to allow weaving efficiency to be improved. Examples of the sizing agent used for the sizing treatment include a sizing agent containing a polyvinyl alcohol resin or an acrylic acid ester resin.

When the sizing treatment is performed, the sizing agent is preferably removed from the woven fabric prior to the step of impregnating or adhering the thermoplastic resin-containing composition into or on the woven fabric in order to eliminate the possibility of reduced adhesiveness between the thermoplastic resin-containing composition for forming the coating material and the woven fabric, and as a result, the possibility of reduced strength and bending resistance of the composite sheet. A general removing method can be adopted as a method for removing the sizing agent, and the sizing agent can be removed by washing with, for example, water, a sodium hydroxide solution, or a detergent

In order to obtain a more homogeneous woven fabric, it is preferable to minimize the amplitude of the woven wave formed by the monofilament or multifilament as the warp and weft in both the woven fabric structure (I) and the woven fabric structure (II). For example, the amplitude of the woven wave may be reduced by using a multifilament that has been subjected to the defibration treatment and/or the smoothing treatment as described above, or may be reduced by producing a woven fabric and then thinning the woven fabric with, for example, a roller as described later.

The basis weight of the woven fabric consisting of liquid crystal polyester fiber may be, for example, 10 to 500 g/m², preferably 15 to 200 g/m². The warp density and the weft density are appropriately selected depending on the yam fineness and the opening ratio, and may be, for example, 10 to 200 yarns/2.54 cm (1 inch), and preferably 30 to 150 yarns/2.54 cm. In addition, the thickness of the woven fabric may be, for example, 10 to 400 µm and preferably 20 to 200 µm. When the basis weight, warp density, weft density, and thickness are within the above range respectively, both light weight and high strength of the composite sheet can be easily achieved.

The woven fabric consisting of liquid crystal polyester fiber is preferably subjected to a thinning treatment. Examples of the method of the thinning treatment include (1) a method of tensioning the woven fabric between rotating rollers or heating rollers, and (2) a method of pressurizing the woven fabric between the heating roller and the nip roller (for example, calendar processing). The thinning treatment stretches the woven wave to form a more homogeneous woven fabric. Therefore, high tensile strength and bending resistance of the composite sheet can be easily obtained, and also the finer texture of the woven fabric can be provided to easily obtain a preferable ratio of the woven fabric to the thermoplastic resin as described later. In addition, light weight of the composite sheet can be improved.

In addition, in the liquid crystal polyester fiber constituting the woven fabric, the ratio of the major axis to the minor axis (major axis / minor axis) of the fiber cross section is preferably 1.1 to 3.0. When the ratio is less than 1.1, the effect of thinning may not be provided, and when the ratio is more than 3.0, tearing or breakage may occur. Thus, the composite sheet having excellent tensile strength and bending resistance, which is the object of the present invention, may not be obtained. The ratio is more preferably 1.3 to 2.8.

The ratio is determined by photographing a cross section of the woven fabric with a scanning electron microscope (SEM), measuring the major axis and minor axis for 100 pieces of liquid crystal polyester fiber randomly selected from the cross-sectional photograph, and calculating the ratio of the major axis / minor axis of each fiber to obtain the average value.

### <Thermoplastic resin>

In the present invention, the thermoplastic resin that can be used is a resin that can form a composite sheet by coating one side or both sides of the woven fabric with a coating material comprising the resin. By coating the woven fabric with the coating material comprising the thermoplastic resin, the intersections of the warp and weft of the woven fabric are joined by the coating material. Therefore, the composite sheet of the present invention can have not only excellent tensile properties in the warp direction and weft direction but also excellent tensile properties in the diagonal direction of the weave (for example, 45° with respect to the warp direction). In addition, when the composite sheet of the present invention is joined to another member, for example, when the composite sheet of the present invention is used as a reinforcing member for another member, the coating film of the coating material comprising the thermoplastic resin can act as an adhesive between the composite sheet of the present invention and another member, and good joining between them can be ensured.

Examples of such thermoplastic resins include polyester resins such as polyethylene terephthalate, modified polyethylene terephthalate, polybutylene terephthalate, and polyethylene naphthalate; polyolefin resins such as polypropylene, modified polypropylene, and polyethylene; polyamide resins such as polyamide 6, polyamide 66, polyamide 12, polyamide 6-12, polyamide 9T, and polyamide 66IT; polycarbonate; polyarylate; polyimide; polyphenylene sulfide; polyether ester ketone; fluororesin; and thermoplastic elastomers such as a polyurethane resin, an acrylic resin, a styrene-based elastomer, and an olefin-based elastomer. These resins may be used singly or in combination of two or more. From the viewpoint that it can be easy to obtain a composite sheet having excellent tensile properties not only in the warp direction and weft direction but also in the diagonal direction of the weave, the thermoplastic resin is preferably selected from the group consisting of a polyurethane resin and an acrylic resin.

### <Composite sheet>

The composite sheet of the present invention has a high tensile strength of 300 N/cm or more in the warp direction of the woven fabric. Such high tensile strength is achieved by the constitution of the composite sheet of the present invention in which one side or both sides of the woven fabric consisting of liquid crystal polyester fiber are coated with the thermoplastic resin-containing coating material. The tensile strength is preferably 400 N/cm or more, and more preferably 500 N/cm or more. The upper limit of the tensile strength is not particularly limited, but is typically 8000 N/cm or less, preferably 5000 N/cm or less, and more preferably 3000 N/cm or less. In addition, the composite sheet of the present invention has a tensile strength of preferably 50 N/cm or more, more preferably 70 N/cm or more, and still more preferably 90 N/cm or more, in a direction of 45° with respect to the warp direction of the woven fabric. The tensile strength in the warp direction and the tensile strength in the direction of 45° with respect to the warp direction can be adjusted to the above lower limit or more by adjusting the basis weight of the woven fabric, the ratio of the mass of the thermoplastic resin to the mass of the woven fabric, or the opening ratio. The upper limit of the tensile strength in the direction of 45° with respect to the warp direction is not particularly limited, but is typically 4000 N/cm or less, preferably 2000 N/cm or less, more preferably 1000 N/cm or less, and particularly preferably 500 N/cm or less. The tensile strength in the present invention is a value measured according to the method described in the Examples described later.

In the present invention, as long as the composite sheet has a tensile strength of 300 N/cm or more and has a ratio of the mass of the thermoplastic resin to the mass of the woven fabric described later in an amount of 5 to 25 % by mass, the thermoplastic resin-containing coating material may coat one side of the woven fabric or may coat both sides thereof. The coating film of the coating material integrates the woven fabric with the coating material comprising the thermoplastic resin in the composite sheet

In the composite sheet of the present invention, the ratio of the mass of the thermoplastic resin to the mass of the woven fabric (mass of the thermoplastic resin / mass of the woven fabric) is 5 to 25% by mass. When the ratio is less than 5% by mass, the composite sheet cannot have the desired high strength. When the ratio is more than 25% by mass, the excellent flexibility and bending resistance of the woven fabric are not sufficiently maintained, and therefore the composite sheet is inferior in flexibility and bending resistance and also inferior in light weight That is, when the ratio is 25% by mass or less, the composite sheet of the present invention maintains excellent flexibility and bending resistance, and therefore the composite sheet of the present invention can have an elastic behavior. In addition, the composite sheet of the present invention is not a prepreg. The ratio is preferably 6 to 25% by mass, and more preferably 8 to 20% by mass. The ratio can be adjusted within the above range by adjusting the basis weight of the woven fabric, the thinning treatment of the woven fabric, or the coating on one side or both sides of the woven fabric. The ratio can be measured according to the method described in the Examples below.

The thickness of the composite sheet of the present invention is preferably 10 to 400 µm, more preferably 20 to 300 µm, and more preferably 30 to 200 µm. When the thickness of the composite sheet is within the above range, the flexibility and light weight of the composite sheet can be easily obtained. The thickness of the composite sheet can be adjusted within the above range by adjusting the basis weight of the woven fabric, the thinning treatment of the woven fabric, the ratio of the mass of the thermoplastic resin to the mass of the woven fabric, or the coating on one side or both sides of the woven fabric. The thickness of the composite sheet can be measured according to the method described in the Examples below.

The tensile strength in the warp direction of the woven fabric per unit thickness of the composite sheet of the present invention is preferably 3.0 N/cm/µm or more, more preferably 4.0 N/cm/µm or more, and still more preferably 5.0N/cm/µm or more. The composite sheet has such a high tensile strength per unit thickness, which indicates that the composite sheet has high strength even if it is thin. The tensile strength per unit thickness is not particularly limited, but is typically 800 N/cm/µm or less, preferably 500 N/cm/µm or less, more preferably 100 N/cm/µm or less, and particularly preferably 50 N/cm/µm or less.

The opening ratio of the composite sheet of the present invention is preferably less than 50%, more preferably 30% or less, still more preferably 20% or less, and particularly preferably 10% or less. The opening ratio in the present invention means the ratio of the area occupied by the plurality of openings of the woven fabric (that is, the portion where the coating material is present and the fiber of the woven fabric is not present) to the total area of the composite sheet. When the opening ratio of the composite sheet is the above upper limit or less, the ratio of the mass of the thermoplastic resin to the mass of the woven fabric can be hardly very high, thereby easily providing the flexibility, bending resistance, and light weight of the composite sheet. The opening ratio can be adjusted to less than the above upper limit or the above upper limit or less by adjusting the basis weight of the woven fabric, the thinning treatment of the woven fabric, or the coating on one side or both sides of the woven fabric. The lower limit of the opening ratio is not particularly limited. The opening ratio is typically 0.01% or more. The opening ratio can be measured according to the method described in the Examples below.

From the viewpoint that the composite sheet of the present invention has flexibility, the flexural rigidity B value, representing the bending property of the composite sheet, is preferably 4.90 × 10⁻² N·cm²/cm or less (5.00 gf·cm²/cm or less), more preferably 3.92 × 10⁻² N·cm²/cm or less (4.00 gf·cm²/cm or less), and still more preferably 2.94 × 10⁻² N · cm²/cm or less (3.00 gf · cm²/cm or less), and the hysteresis width, 2HB value, is preferably 1.08 × 10⁻² N · cm/cm or less (1.10 gf·cm/cm or less), more preferably 1.03 × 10⁻² N · cm/cm or less (1.05 gf · cm/cm or less), and still more preferably 9.81 × 10⁻³ N · cm/cm or less (1.00 gf·cm/cm or less). The bending property in the present invention is a numerical value of bending easiness corresponding to the flexibility of the composite sheet. The smaller the B value and the 2HB value, the easier the composite sheet is bent and the more flexible the composite sheet. The bending property of the composite sheet can be adjusted to the above upper limit or less by adjusting the composition of the coating material, the basis weight of the woven fabric, the thinning treatment of the woven fabric, or the coating on one side or both sides of the woven fabric. Particularly, preferable is the method of adjusting the bending property to the upper limit or less by using a thermoplastic resin instead of a thermosetting resin such as an epoxy resin that is conventionally used as a component of the coating material. The bending property can be measured according to the method described in the Examples below.

### <Production method of composite sheet>

The composite sheet of the present invention can be produced by preparing a woven fabric consisting of liquid crystal polyester fiber and impregnating or adhering a thermoplastic resin-containing composition for forming a coating material to the woven fabric.

In the preparation step of preparing the woven fabric, the woven fabric may be physically and/or chemically treated, as necessary, in order to improve the adhesion with the thermoplastic resin-containing composition to be impregnated or adhered.

Examples of the physical treatment include a corona discharge treatment, a glow discharge treatment, a plasma treatment, an electron beam treatment, an ultraviolet treatment, a heat treatment in an oxygen-containing atmosphere, and a heat treatment in a water-containing atmosphere. Examples of the chemical treatment include an acid treatment, an alkaline treatment, and a treatment using an oxidizing agent. The chemical treatment may be performed at room temperature or with heating, and is preferably performed with heating. These treatments may be performed singly or in combination of two or more. Of these treatments, physical treatments such as an ultraviolet treatment or a heat treatment are preferable from the viewpoint of efficiently producing the composite sheet.

In the ultraviolet treatment, for example, a low pressure mercury lamp or an ultraviolet lamp such as an excimer lamp can be used. The energy density of the ultraviolet treatment is, for example, 0.1 to 50 mW/cm², and preferably 1 to 40 mW/cm², from the viewpoint of improving the adhesion without deteriorating the woven fabric. In addition, the irradiation time can be appropriately set depending on, for example, the energy density, and is, for example, 10 seconds to 10 minutes, and preferably 20 seconds to 5 minutes.

In the heat treatment in an oxygen-containing atmosphere, the heat treatment may be performed at, for example, 230 to 350°C, and preferably 250 to 330°C. The heating time is, for example, 1 to 100 hours, and preferably 10 to 80 hours.

The method of impregnating or adhering the thermoplastic resin-containing composition to the woven fabric is not particularly limited, and conventionally known methods such as an impregnation method, a coating method, or a transfer method can be used. Specifically, the methods that can be adopted are: a method of impregnating or adhering a thermoplastic resin-containing composition prepared by dissolving a thermoplastic resin and optionally an additive in a solvent to a woven fabric and then drying the woven fabric; a method of impregnating or adhering a thermoplastic resin-containing composition comprising a heat-melted thermoplastic resin and optionally an additive to a woven fabric; a method of fixing a powdered thermoplastic resin optionally with an additive to a woven fabric; and a method of forming a layer of a coating material on a film or sheet having releasability and then transferring it to a woven fabric. When the thermoplastic resin-containing composition impregnated or adhered to the woven fabric is dried, drying is preferably performed in a noncontact state with a vertical dryer. In addition, the solvent and the additive optionally blended in the thermoplastic resin-containing composition are not particularly limited as long as the effect of the present invention is not impaired, and a commonly used solvent and additive may be used singly or in combination of two or more. When neither the solvent nor the additive is added to the thermoplastic resin-containing composition, the thermoplastic resin-containing composition consists of a thermoplastic resin.

In the composite sheet of the present invention, the ratio of the mass of the thermoplastic resin to the mass of the woven fabric is 5 to 25% by mass. In order to adjust to the above ratio or to thin the composite sheet (to reduce the weight), a part of the impregnated or adhered thermoplastic resin-containing composition may be removed, as necessary. The method of removing the thermoplastic resin-containing composition is not particularly limited, and for example, a method using a roller or a doctor knife can be adopted.

### EXAMPLES

Hereinafter, the present invention will be described in more detail with reference to Examples, but the present invention is not limited to these Examples.

### [Measurement method or evaluation method]

### <Ratio of mass of thermoplastic resin to mass of woven fabric>

The mass of each woven fabric and the mass of each composite sheet produced in Examples and Comparative Examples were measured, and from these values, the mass of the thermoplastic resin was calculated for each composite sheet to calculate the ratio of the mass of the thermoplastic resin to the mass of the woven fabric.

### <Thickness of woven fabric and thickness of composite sheet>

Using the constant pressure thickness measuring instrument "PG-15J" manufactured by Teclock Co., Ltd., the thickness of the woven fabric and the thickness of the composite sheet were respectively measured at three points, and the average values were respectively calculated.

### <Tensile strength and tensile elongation of composite sheet in warp direction>

Using the Instron 3365 testing machine manufactured by Instron Japan Company Limited, tensile strength and tensile elongation were measured for a 1 cm wide sample under the conditions of a sample length of 10 cm and a test speed of 5 cm/min. The number of measurements was N = 3, and the average values of tensile strength and tensile elongation were respectively calculated. The sample was cut out so that the sample length was parallel to the warp.

### <Tensile strength of composite sheet in 45° direction>

Using the Instron 3365 testing machine manufactured by Instron Japan Company Limited, tensile strength was measured for a 1 cm wide sample under the condition of a sample length of 3 cm and a test speed of 5 cm/min. The number of measurements was N = 3, and the average value was calculated. The sample was cut out so that the sample length was parallel to the 45° direction with respect to the warp.

### <Bending resistance of composite sheet: MIT bending test>

In accordance with JISP8115: 2010, using the MIT crumpling endurance tester manufactured by Toyo Seiki Seisakusho Co., Ltd., the number of reciprocating was measured for each 1 cm wide sample until the sample was cut under the conditions of a load of 0.5 kgf, a bending speed of 175 times/minute, and a bending angle of 270° (about 135° to each of the left and right). The number of measurements was N = 3, and the average value was calculated. The upper limit of the number of measurements was set to be 60000.

### <Opening ratio of composite sheet>

Each of the composite sheets produced in Examples and Comparative Examples was observed by using a microscope VHX-5000 manufactured by KEYENCE CORPORATION, and the opening ratio was calculated by using the attached image analysis software.

### <Bending property (flexural rigidity B value and hysteresis width 2HB value)>

The automated pure bending tester ("KES-FB2-AUTO-A", manufactured by KATO TECH CO., LTD.) was used to measure the bending property. Each of the composite sheets produced in Examples and Comparative Examples was cut into 2 cm × 22 cm so that the warp direction was the long side, and used as a test piece. The bending test of each test piece was performed with a curvature in the range of-2.5 cm⁻¹ to + 2.5 cm⁻¹ and a constant velocity (deformation speed of 0.5 cm⁻¹/sec). The bending test was performed in one cycle, and the flexural rigidity B value per unit length (unit: gf- cm²/cm) and the hysteresis width 2HB value (unit: gf · cm/cm) were determined. The number of measurements was N = 3, and the average values were respectively determined and converted into SI units (flexural rigidity B value per unit length: N·cm²/cm, hysteresis width 2 HB value: N·cm/cm).

### Example 1

(1) A liquid crystal polyester polymer having a ratio (molar ratio) between the constituent unit (A) and the constituent unit (B) of 75/25 was used. The logarithmic viscosity ηᵢₙₕ of this polymer was 5.6 dl/g and the melting point was 281 °C. This polymer was spun from a mouthpiece with a nozzle diameter of 0.15 mmφ by using a commonly used melt spinning apparatus to obtain a 220 dtex/40 filament multifilament This multifilament was treated in a nitrogen atmosphere at 270°C for 20 hours. The tensile strength of the treated multifilament measured in accordance with JIS L 1013 was 22.2 cN/dtex.
(2) The treated multifilament was subjected to a sizing treatment. Using the multifilament after the sizing treatment as the warp and the multifilament before the sizing treatment as the weft, a plain woven fabric having a warp density of 35 yarns/2.54 cm and a weft density of 35 yarns/2.54 cm was produced by a conventional method. In addition, the plain woven fabric was washed with water to remove the sizing agent used for the sizing treatment from the plain woven fabric. Thereafter, the plain woven fabric was placed between the mirror rolls made of stainless steel and subjected to calendar processing at a linear pressure of 160 kg/cm and a temperature of 150°C. Table 5 shows the basis weight and thickness of the plain woven fabric after the calendar processing.
(3) A thermoplastic resin-containing composition comprising a polyurethane resin and a solvent was applied onto the surface of the plain woven fabric that had been subjected to the calendar processing, and dried at 120°C for 5 minutes to produce a composite sheet.
(4) Using the obtained composite sheet, the tensile strength and tensile elongation in the warp direction, the tensile strength in the 45° direction, the bending resistance, and the opening ratio were evaluated. In addition, the tensile strength in the warp direction of the plain woven fabric per unit thickness of the composite sheet was calculated. The obtained results are shown in Table 5.
(5) Moreover, the adhesion of the obtained composite sheet to a hot melt sheet was examined. Specifically, the composite sheet was cut out to obtain a sample with a width of 30 mm and a length of 200 mm so that the sample length was parallel to the warp, and a hot melt tape manufactured by San Kasei Kogyo Co., Ltd. was thermocompression-bonded at 140°C for 20 seconds to the sample. Using a tensile tester (TENSILON RTG-1250), the peel strength was measured at N = 1 under the condition of a test speed of 200 mm/min. The result is shown in Table 6.

### Examples 2 to 4

A composite sheet was produced and evaluated in the same manner as in Example 1 except that the yam fineness, the warp density, the weft density, the basis weight of the woven fabric, and the thickness were changed as shown in Table 5. The obtained results are shown in Table 5.

### Example 5

A composite sheet was produced and evaluated in the same manner as in Example 1 except that an acrylic resin was used instead of the polyurethane resin. The obtained results are shown in Table 5.

### Comparative Example 1

A composite sheet was produced and evaluated in the same manner as in Example 1 except that the yam fineness, the warp density, the weft density, the basis weight of the woven fabric, and the thickness were changed as shown in Table 5. The obtained results are shown in Table 5.

### Comparative Example 2

A plain woven fabric was produced in the same manner as in Example 1 except that the thickness of the woven fabric was changed as shown in Table 5. For the plain woven fabric obtained after weaving without the calendar processing performed in Examples, the same evaluation as the composite sheet in Example 1 was performed. The obtained results are shown in Table 5. In addition, the adhesion of the obtained plain woven fabric to the hot melt sheet was evaluated in the same manner as in Example 1. The result is shown in Table 6.

### Comparative Examples 3 and 4

For each of the 75 µm-thick polyimide film (Kapton (trade mark) 300H manufactured by Toray DuPont Co., Ltd.) and the 125 µm-thick polyimide film (Kapton (trade mark) 500H manufactured by Toray DuPont Co., Ltd.), the basis weight, tensile strength (MD direction), tensile elongation (MD direction), and tensile strength per unit thickness (MD direction) were converted from the catalog values, and the bending resistance was evaluated in the same manner as in Example 1. The obtained results are shown in Table 5.

### Comparative Example 5

Steps (1) and (2) in Example 1 were performed to produce a plain woven fabric that had been subjected to the calendar processing. The basis weight and thickness are shown in Table 7.

Thereafter, an epoxy-blended resin sheet was attached to the surface of the plain woven fabric that had been subjected to the calendar processing, and the epoxy resin was cured by heating at 130°C for 120 minutes to produce a composite sheet.

For the composite sheet using the thermoplastic resin obtained in Example 1 and the composite sheet using the thermosetting resin obtained in Comparative Example 5, the bending property was measured. The obtained results are shown in Table 7.

**[Table 5]**

| | Woven fabric | | | | | | Coating material | | Composite sheet | | | | Tensile strength | | Tensile strength in warp direction per unit thickness | Tensile elongation | Bending resistance |
|---|---|---|---|---|---|---|---|---|---|---|---|---|---|---|---|---|---|
| | Fiber | Yam fineness | Warp density | Weft density | Basis weight | Thickness | Resin | 100% Modulus of resin | Ratio of resin/woven fabric | Basis weight | Thickness | Opening ratio | Warp direction | 45° direction | | Warp direction | MIT bending test |
| | | dtex | yarns /2.54cm | yarns /2.54cm | g/m² | µm | | MPa | % by mass | g/m² | µm | % | N/cm | N/cm | N/cm/µm | % | Number of times |
| Example 1 | Liquid crystal polyester fiber | 220 | 35 | 35 | 62 | 110 | Polyurethane resin | 4.02 | 18 | 76 | 146 | 6 | 821 | 111 | 5.6 | 6.0 | 20000 |
| Example 2 | | 56 | 100 | 100 | 43 | 130 | | 4.02 | 17 | 52 | 50 | 5 | 597 | 299 | 11.9 | 7.5 | 40000 |
| Example 3 | | 110 | 75 | 75 | 60 | 130 | | 4.02 | 15 | 71 | 70 | 1 | 708 | 287 | 10.1 | 9.3 | 60000 (upper limit) |
| Example 4 | | 220 | 55 | 55 | 101 | 110 | | 4.02 | 9 | 111 | 140 | 2 | 1180 | 335 | 8.4 | 12.3 | 60000 (upper limit) |
| Example 5 | | 220 | 35 | 35 | 62 | 110 | Acrylic resin | 0.4 | 16 | 74 | 135 | 6 | 732 | - | 5.4 | 3.4 | 20000 |
| Comparative Example 1 | Liquid crystal polyester fiber | 110 | 25 | 25 | 22 | 76 | Polyurethane resin | 4.02 | 19 | 27 | 69 | 39 | 279 | - | 4.0 | 6.0 | 15000 |
| Comparative Example 2 | | 220 | 35 | 35 | 62 | 140 | None | - | - | - | - | 9 | 743 | 2 | 5.3 | 6.1 | 60000 (upper limit) |
| Comparative Example 3 | Polyimide film "Kapton (registered trademark) 300H" | | | | | | | | - | 107* | 75** | - | 206* | - | 2.7* | 85* | 5000" |
| Comparative Example 4 | Polyimide film "Kapton (registered trademark) 500H" | | | | | | | | - | 178* | 125" | - | 319 | - | 2.5* | 75* | 800** |

| | | | | | | | | | | | | | | | | | |
|---|---|---|---|---|---|---|---|---|---|---|---|---|---|---|---|---|---|
| *Value converted from catalog value **Catalog value | | | | | | | | | | | | | | | | | |

**[Table 6]**

| | Woven fabric | | | | Coating material | Peel strength |
|---|---|---|---|---|---|---|
| | Fiber | Yam fineness | Warp density | Weft density | | |
| | | dtex | yarns /2.54cm | yarns /2.54cm | | kg/cm |
| Example 1 | Liquid crystal polyester fiber | 220 | 35 | 35 | Polyurethane resin | 1.87 |
| Comparative Example 2 | | 220 | 35 | 35 | None | 0.82 |

**[Table 7]**

| | Woven fabric | | | | | | Coating material | Composite sheet | Bending property | |
|---|---|---|---|---|---|---|---|---|---|---|
| | Fiber | Yam fineness | Warp density | Weft density | Basis weight | Thickness | Resin | Ratio of resin/woven fabric | B value | 2HB value |
| | | dtex | yarns /2.54cm | yarns /2.54cm | g/m² | µm | | % by mass | | |
| Example 1 | Liquid crystal polyester fiber | 220 | 35 | 35 | 62 | 110 | Polyurethane resin | 18 | 1.45×10⁻² N·cm²/cm (1.48gf·cm²/cm) | 9.38×10⁻³ N·cm/cm (0.96gf·cm/cm) |
| Comparative Example 5 | Liquid crystal polyester fiber | 220 | 35 | 35 | 62 | 110 | Epoxy resin | 59 | 5.92×10⁻² N·cm²/cm (6.04gf·cm²/cm) | 1.13×10⁻² N·cm/cm (1.15gf·cm/cm) |

As can be seen from Table 5, in Examples 1 to 5, the basis weight of the composite sheet was small, the tensile strength was high not only in the warp direction but also in the 45° direction, the tensile strength per unit thickness was high, and the bending resistance and flexibility were excellent. That is, the composite sheet of the present invention had light weight, high strength, excellent flexibility, and high bending resistance. On the other hand, in Comparative Example 1, the tensile strength in the warp direction was low, the tensile strength in the warp direction per unit thickness was also low, and therefore both light weight (thinning) and high strength failed to be achieved. In Comparative Example 2, bending resistance was excellent; however, the tensile strength in the 45° direction was extremely low. In Comparative Example 3 and Comparative Example 4, the tensile strength, the tensile strength per unit thickness, and the bending resistance were all low.

As can be seen from Table 6, in Example 1, the coating film of the coating material comprising the thermoplastic resin was able to act as an adhesive between the composite sheet of the present invention and the hot melt sheet, allowing good joining between them to be ensured. On the other hand, Comparative Example 2 showed only low adhesion to the hot melt sheet.

As can be seen from Table 7, in Example 1, the composite sheet was produced by using the urethane resin, which is a thermoplastic resin, for the coating material, thereby providing the sheet having a low value for bending property of the sheet and excellent flexibility. On the other hand, in Comparative Example 5, the composite sheet was produced by using the epoxy resin, which is a thermosetting resin, for the coating material, thereby providing the sheet having a higher value for the bending property and inferior flexibility than in Example 1.

### INDUSTRIAL APPLICABILITY

The composite sheet of the present invention can be preferably used as a reinforcing member, for example, for a flexible substrate, an internal member, various arms, various frames, and various hinges of an electric-electronic device.

## Claims

1. A composite sheet comprising a woven fabric consisting of liquid crystal polyester fiber in which one side or both sides of the woven fabric is coated with a coating material comprising a thermoplastic resin,
wherein a tensile strength of the composite sheet in a warp direction of the woven fabric is 300 N/cm or more, and
wherein a ratio of a mass of the thermoplastic resin to a mass of the woven fabric is 5 to 25% by mass.

2. The composite sheet according to claim 1, wherein the thermoplastic resin is selected from the group consisting of a polyurethane resin and an acrylic resin.

3. The composite sheet according to claim 1 or 2, wherein a tensile strength of the composite sheet in a direction of 45° with respect to a warp direction of the woven fabric is 50 N/cm or more.

4. The composite sheet according to any one of claims 1 to 3, wherein the composite sheet has a thickness of 10 to 400 µm.

5. The composite sheet according to any one of claims 1 to 4, wherein a tensile strength of the composite sheet per unit thickness in a warp direction of the woven fabric is 3.0 N/cm/µm or more.

6. The composite sheet according to any one of claims 1 to 5, wherein the liquid crystal polyester fiber is a multifilament.

7. The composite sheet according to any one of claims 1 to 6, wherein the composite sheet has an opening ratio of less than 50%.

8. The composite sheet according to any one of claims 1 to 7, wherein a flexural rigidity B value of the composite sheet is 4.90 × 10⁻² N·cm²/cm or less.
